# EUROPEAN PATENT SPECIFICATION

(11) **EP 3 613 880 B1**
(45) Date of publication and mention of the grant of the patent: **02.04.2025**
(21) Application number: 19275024.8
(22) Date of filing: 01.03.2019
(51) Int. Cl.: D02G 3/06, D02G 3/40, B29C 70/16

(54) **IMPROVEMENTS IN OR RELATING TO POLYMER MATERIALS**
VERBESSERUNGEN AN ODER IM ZUSAMMENHANG MIT POLYMERMATERIALIEN
AMÉLIORATIONS APPORTÉES OU SE RAPPORTANT À DES MATÉRIAUX POLYMÈRES

(30) Priority: 01.03.2018 GB 201803322
(43) Date of publication of application: 26.02.2020
(73) Proprietor: DON & LOW LIMITED, Forfar, Angus DD8 1FR, Scotland (GB)
(72) Inventor: HYND, John Patrick, Angus, DD8 1FR (GB)
(74) Representative: Marks & Clerk LLP

(56) References cited:
- DE-A1- 102011 119 245
- GB-A- 2 266 322
- US-A- 6 114 000

## Description

### FIELD OF INVENTION

This invention relates to a woven fabric formed from a polymeric/thermoplastic/ composite tape, to a laminated material or article made from said fabric, such as a thermoformed article, and to a method of making or forming same. The composite fabric may be suitable for a variety of applications. For example, composite fabrics of the present invention may be comprised in articles used for anti-ballistic and/or defensive purposes. Composite fabrics of the present invention may be comprised in articles to afford high-impact resistance properties.

Embodiments of this invention relate to composite elongate elements, which are used to produce a fabric incorporating similar or dissimilar materials in the warp and weft, such fabric being suitable for consolidating into single layer or multilayer shells or structures, e.g. under the action of heat and pressure without the need for additional resin or adhesive.

### BACKGROUND TO INVENTION

Self-reinforcing Polypropylene (srPP) fabric is known. Such is marketed by the present Applicant under the brand name ARMORDON ^{®}. Similar materials are available from other companies, e.g. CURV ^{®} from Propex and PURE ^{®} from DIT.

WO 91/11324 (DON & LOW) discloses a thermoplastic composite material comprising a molecularly-oriented thermoplastic polymer base having at least one thermoplastic surface polymeric layer compatibly bonded to said polymer base by molecular interspersion between the contiguous surfaces of the adjoining base and surface layers, and said surface polymeric layer having a softening temperature lower than that of the polymer base.

GB 2 266 322 (DON & LOW) discloses a knotted net structure, e.g. a fishing net, formed of a plurality of interwoven elongate elements, each of said elements comprising a thermoplastic polymer base having at least one thermoplastic surface polymeric layer bonded to said polymer base, said surface polymeric layer having a softening temperature lower than that of the polymer base.

GB 2 492 644 (DON & LOW) discloses a fabric or material comprising: at least first elongate elements and second elongate elements that are mutually interspersed; wherein the first elongate elements comprise a polymer base and at least one polymeric surface layer, wherein the at least one polymeric surface layer has a softening temperature lower than that of the polymer base; and wherein at least a surface of the second elongate elements comprises an ultra high molecular weight polyalkylene (UHMWPA), wherein the ultra high molecular weight polyalkylene is a material dissimilar to the polymeric surface layer, and the first elongate elements are fusible together with the second elongate elements at least at intersections.

By "molecular interspersion" is meant the intimate molecular compatibility of molecules of the surface layer and the adjacent polymer and vice versa, so that there is intermingling or fusion at their contiguous boundaries. It is believed that such molecular interspersion effectively forms an amorphous sheath which protects the polymer base against fracture during drawing, thus providing mutual mechanical reinforcement.

Mutual mechanical reinforcement involves the surface material being capable of high elongation when drawn in the solid state (or even being drawn at a temperature above its softening point, i.e. in the molten state). With a polymer layer of high modulus, and crystalline or oriented material sandwiched between amorphous high elongation surface layers, propagation of transverse fractures is inhibited allowing the total composite to be highly drawn.

A problem exists in the prior art. Single ribbon tapes of co-extruded polymer are used as warp and weft to weave fabrics. These fabrics are then layered up and hot pressed to make shaped articles. When those articles are subjected to shock loads then an article may fail due to delamination between consolidated fabric layers.

It is an object of at least one embodiment of at least one aspect of the present invention to obviate or at least mitigate one or more problems or disadvantages in the prior art.

It is an object of at least one embodiment of at least one aspect of the present invention to provide a fabric that may be formed without the use of, for example, a resin matric material, a film, or an adhesive. The fabric may, therefore, be self-adhering or self-supporting.

It is an object of at least one embodiment of at least one aspect of the present invention to provide a single layer fabric which has sufficient impact resistance for use in a formed article, e.g. a suitcase shell.

It is an object of at least one embodiment of at least one aspect of the present invention to provide a laminated fabric or material which has sufficient impact resistance for use in a formed article, e.g. a suitcase shell, and which has a reduced number of layers compared to the prior art.

### SUMMARY OF INVENTION

According to a first aspect of the present invention there is provided a woven fabric, comprising at least one composite elongate element adapted for use as a tape, the composite elongate element comprising a plurality of elongate elements twisted together, wherein at least one of the elongate elements comprises a polymeric base and at least one polymeric surface layer, the at least one polymeric surface layer having a softening temperature lower than that of the polymeric base (e.g. at least 10°C lower), and wherein the at least one elongate element is substantially planar prior to twisting.

The polymeric base and the/each at least one polymeric surface layer may be sandwiched and/or bonded together.

Herein, composite elongate element is meant to comprise or include a plurality of elongate elements that are twisted together.

It has been found that twisting together of the plurality of elongate elements (e.g. along their length) provides advantage over the prior art, e.g. weaving together of single yarns. An advantage is beneficial increased distribution of the at least one polymeric base/polymeric surface layer throughout a matrix of the woven fabric.

Each of the plurality of elongate elements and/or the composite elongate element may have tensile strength, but may be too flexible to provide compressive strength. The/each of the plurality of elongate elements and/or composite elongate elements may be coilable or reelable.

In one embodiment of the present invention the plurality of elongate elements may comprise two elongate elements. In another embodiment of the present invention the plurality of elongate elements may comprise three elongate elements. Alternatively, the plurality of elongate elements may comprise more than three elongate elements.

Beneficially there may be provided 20 to 100 or 40 to 60 twists per metre length of the composite elongate element.

The plurality of elongate elements may be twisted together in a left-handed or S-twist or in a right-handed or Z-twist (according to ISO 2).

In one implementation the at least one of the elongate elements may comprise one or more of the plurality of elongate elements. In another implementation the at least one of the elongate elements may comprise each of the plurality of elongate elements. In said one implementation, other of the plurality of elongate elements may comprise a polymeric material(s). At least a surface of the other of the plurality of elongate elements may comprise a material or materials similar or dissimilar to, and/or thermally compatible (e.g. having a softening temperature the same as or higher, e.g. at least to 10°C higher) than the at least one polymeric surface of the at least one elongate element.

In one implementation each of the plurality of elongate elements may be substantially planar, e.g. comprise tapes, prior to twisting.

Beneficially, surfaces, e.g. said at least one polymeric surface layer, of adjacent elongate elements may contact or touch one another.

The/each at least one elongate element may be a coextruded tape, for example, made by a co-extrusion process.

The/each at least one elongate element may comprise a tape of the form A-B, where B comprises the polymeric base and A comprises the at least one polymeric surface layer.

The/each at least one elongate element may comprise a tape of the form A-B-A, where B comprises the polymeric base and A comprises opposing polymeric surface layers.

The polymeric base and the/each at least one polymeric surface layer may be sandwiched and/or bonded together.

Advantageously the at least one elongate element may comprise a self-reinforcing polymeric material such as self-reinforcing polypropylene (srPP).

The/each at least one elongate element may comprise a molecularly-oriented thermoplastic polymeric base which may have at least one thermoplastic surface polymeric layer compatibly bonded to said polymeric base by molecular interspersion between contiguous surfaces of the adjoining base and surface layer(s).

The/each at least one elongate element may be selected from polypropylene, polyesters, polyethyleneterephthalate, polyamides, Nylon (e.g. Nylon 6 or 6.6), or a polyethylene, e.g. having a density in the range 0.940 to 0.970, or linear low density polyethylene.

The polymer base may comprise a molecularly-oriented polyolefin polymer, such as a polypropylene polymer.

The polymeric surface layer(s) may be compatibly bonded to the polymer base by molecular interspersion between the contiguous surfaces of the adjoining base and surface layers.

The polymeric surface layer may comprise ethylene-propylene co-polymer, polybutylene, polybutene-1 or a co-polymer comprising two or more of butylene, ethylene and propylene, co-polyesters and co-polyamides.

The polymer base may be polypropylene and/or the surface layer(s) may comprise an ethylene-propylene co-polymer, a polybutylene such as polybutene-1 or a co-polymer comprising two or more of butylene, ethylene and propylene.

The polymer base may be polyester and/or the polymeric surface layer(s) may comprise a co-polyester, or the polymer base may be a polyamide and the polymeric surface layer(s) may comprise a co-polyamide.

Elongate elements other than the at least one elongate element may comprise (or solely comprise) a polymeric material, e.g. polypropylene, polyester, polyethylene.

The polymeric material and/or at least a surface layer polymer material of the other elongate elements may be thermally compatible, and/or autogenously bonded with the polymeric material of the at least one surface layer of the/each at least one elongate element. The polymeric material and/or at least a surface layer polymer material of the other elongate elements may have a softening point of 10°C or more higher than the softening point of the polymer material of the at least one surface layer of the/each at least one elongate element.

The fabric may advantageously comprise a single layer of fabric. The single layer of fabric may be consolidated or consolidatable, e.g. by application of heat and/or pressure.The fabric of the present invention has been found to possibly provide advantages over the prior art, e.g. it has been found that since a single layer of the fabric is heavier than a single layer of single yarn weave of the prior art, whereas in the prior art single layers have been laminated together to provide a suitable material for forming of a product, a single layer of fabric of the present invention suffices. This avoids the need for lamination, so simplifying the manufacturing process and/or obviates and/or mitigates the problem of delamination.

The fabric may also comprise a plurality of further elongate elements, e.g. twisted elongate elements, which may be polymeric. The plurality of further elongate elements may beneficially be the same as the plurality of composite elongate elements.

The plurality of composite elongate elements and plurality of further elongate elements may be mutually interspersed.

At least a surface of the further elongate elements may comprise a material or materials similar or dissimilar to the polymer surface layer(s).

Adjacent, e.g. side-by-side, overlaid, cross-laid or intersecting, elongate elements may be fusible together at least at intersections.

Fusing may comprise heating the fabric above the melting temperature of the polymeric surface layer(s). Fusing may comprise cooling the fabric to allow the surface layer to solidify. Fusing the elements may comprise subjecting the fabric to pressure. Fusing may be achieved by single closure press with flat or contoured plates, continuous belt press, induction heated press or via vacuum bagging and autoclaving.

Preferably the fabric may be formed without the use of, for example, a resin matrix material, a film or an adhesive.

The further elongate elements may be selected from tapes, threads, fibres, filaments, strands, or the like.

The further elongate elements may comprise a single layer or homogenous layer.

The further elongate elements may comprise a plurality of layers.

The further elongate elements may comprise a material or material similar or dissimilar to the polymeric surface layer.

The elongate elements or members and the further elongate members may be formed as tapes.

The elongate elements may comprise one or two surface layers or two opposing surface layers.

The elongate elements may comprise a layered structure, e.g. may comprise a base polymer sandwiched by two polymeric surface layers.

The elongate elements and/or further elongate elements may be woven, knitted, stitched, or may be laid out to form a random fibrous web or may be randomly interspersed to form the material.

Beneficially, the elongate elements and/or further elongate elements may be woven together to form a fabric.

The composite elongate elements and further elongate elements may be woven together to form the fabric or material. The warp may be formed of composite or further elongate elements and the weft may be formed of the other. The warp may be formed of composite elongate elements and the weft may be formed of further elongate elements. Alternatively, the warp may be formed of further elongate elements and the weft may be formed of composite elongate elements.

Alternatively, the composite and further elongate elements are woven together to form the fabric or material, and the warp and/or the weft may comprise a mixture of composite and further elongate elements. The mixture of composite and further elongate elements may be a random arrangement of composite and further elongate elements. Alternatively, the mixture of composite and further elongate elements may be a regular alternation of composite and elongate elements.

The further elongate elements may comprise one or more of: polyesters, polyamides, aramids, thermoplastic polymers, molecularly-oriented thermoplastic polymers, ultra high molecular weight polyalkylenes (UHMWPA), such as ultra high molecular weight polyethylene (UHMWPE) or ultra high molecular weight polypropylene (UHMWPP), multifilament nucleated polypropylenes, and/or carbon fibres.

The further elongate elements may be formed of hybrid yarns.

The hybrid yarns may be formed of at least two different materials or fibres comprising polyesters, polyamides, aramids, thermoplastic polymers, molecularly-oriented thermoplastic polymers, ultra high molecular weight polyalkylenes (UHMWPA), such as ultra high molecular weight polyethylene (UHMWPE) or ultra high molecular weight polypropylene (UHMWPP), multifilament nucleated polypropylenes, and/or carbon fibres.

The further elongate elements may be formed of hybrid yarns selected from hybrid yarns comprising aramids and UHMWPE or hybrid yarns comprising polypropylene.

The further elongate elements may comprise or consist of ultra high molecular weight polyalkylenes selected from UHMWPE or UHMWPP.

According to a second aspect of the present invention there is provided a laminated material comprising a plurality of layers, wherein at least one of said layers comprises a fabric according to the first aspect of the present invention.

In one implementation the laminated material comprises two layers, e.g. only two layers, or three layers, e.g. only three layers.

Preferably each layer comprises a fabric according to the first aspect of the present invention.

According to a third aspect of the present invention there is provided an article, such as a three-dimensional article, formed from a (single layer of) fabric of the first aspect of the present invention, or alternatively formed from a laminated material of the second aspect of the present invention.

The article may be formed by a moulding technique, e.g. press-moulding.

The article may be capable of withstanding relatively high impact, i.e. the article may have high impact resistance properties.

The article may comprise a luggage shell, e.g. a shell for a suitcase.

The article may comprise or be selected from: an armour product, e.g. body armour, automotive (vehicle) component, or sportswear product.

The article may be adapted for antiballistic purposes and/or comprises bulletproof vests, body armour, panels suitable for the protection of military and commercial vehicles, bin liners, blast basket or blast blankets to contain fragmentation debris from the detonation of explosive devices.

The article may find use as carpet backing which may be used in automotive or aerospace application or which comprises panels suitable for use on automotive vehicles.

The article may comprise toe-caps for protective footwear, connecting straps of handles of intermediate bulk containers or the containers themselves, tarpaulins, packaging, luggage, protective cases, or pipes.

According to a fourth aspect of the present invention there is provided a method of forming a woven fabric, the method comprising:
providing a plurality of composite elongate elements, wherein each composite elongate element comprises a plurality of elongate elements twisted together, wherein at least one of the elongate elements comprises a polymeric base and at least one polymeric surface layer, the at least one polymeric surface layer having a softening temperature lower than that of the polymeric base, and wherein the at least one elongate element is substantially planar prior to twisting; weaving said plurality of composite elongate elements into said woven fabric; and consolidating the fabric by application of heat and/or pressure.

Said step of providing may also comprise providing a plurality of further elongate elements, which may be polymeric.

The plurality of composite elongate elements may comprise warp yarns. Alternatively or additionally, the plurality of composite elongate elements may comprise weft yarns.

According to a fifth aspect of the present invention there is provided a method of forming an article, such as a three-dimensional article, comprising the steps of:
providing a single layer of fabric according to the first aspect of the present invention or a laminated material according to the second aspect of the present invention and
forming the fabric or laminated material into the article.

### BRIEF DESCRIPTION OF DRAWINGS

Embodiments of the present invention will now be described by way of example only, with reference to the accompanying drawings, which are:
- **Figure 1**: a schematic representation of a side view of a first (two-layer) elongate element for use in embodiments of the present invention;
- **Figure 2**: a schematic representation of a side view of a second (three-layer) elongate element for use in embodiments of the present invention;
- **Figure 3**: a schematic representation of a side view of a first multi-fibre (two-fibre) yarn for use in embodiments of the present invention;
- **Figure 4**: a schematic representation of a side view of a second multi-fibre (three-fibre) yarn for use in embodiments of the present invention;
- **Figure 5**: a schematic view of a woven fabric according to an embodiment of the present invention prior to consolidation;
- **Figure 6**: a schematic view of a woven fabric according to an embodiment of the present invention comprising a single layer of the woven fabric of Figure 5 after consolidation;
- **Figures 7(a) and (b)**: schematic views of a laminated material according to an embodiment of the present invention comprising a plurality of layers (two layers) of the woven fabric of Figure 5 prior to lamination and after lamination;
- **Figure 8**: a schematic view of a laminated material according to an embodiment of the present invention comprising a plurality of layers (three layers) of the woven fabric of Figure 5; and
- **Figures 9 to 12**: schematic views of formed products beneficially made from a single layer of the woven fabric of Figure 6, or alternatively, from the laminated material of Figures 7(b) or Figure 8.

### DETAILED DESCRIPTION OF DRAWINGS

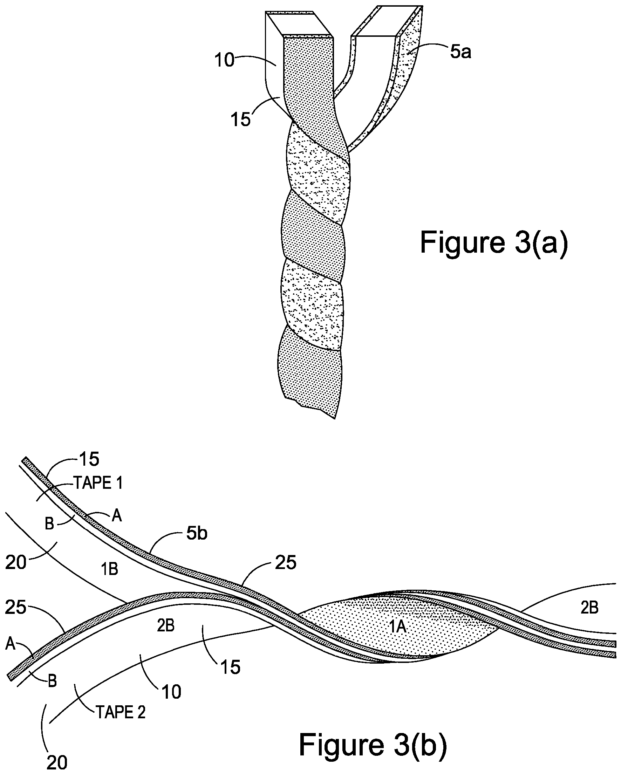

Referring to Figures 3(a) to 4(b), there are shown first to fourth embodiments of a composite elongate element according to the present invention, the composite elongate element 5a to 5d comprising a plurality of elongate elements 10 twisted together, wherein at least one of the elongate elements 15 comprises a polymeric base 20 and at least one polymeric surface layer 25, the at least one polymeric surface layer 25 having a softening temperature lower than that of the polymeric base 20.

Herein, the term 'composite elongate element' is meant to comprise or include a plurality of elongate elements, yarns, tapes, strands, plies, or fibres that are twisted together.

It has been found that twisting together of the plurality of elongate elements 10 provides advantage over the prior art, e.g. weaving together of single yarns. An advantage is believed to be beneficial increased distribution of the at least one polymeric base/polymeric surface layer 25 throughout a matrix of the woven fabric.

Each of the plurality of elongate elements 15 and the composite elongate elements 5a to 5d *per se* has/have tensile strength, but is/are too flexible to provide compressive strength. The composite elongate element 5a to 5d is capable of being woven.

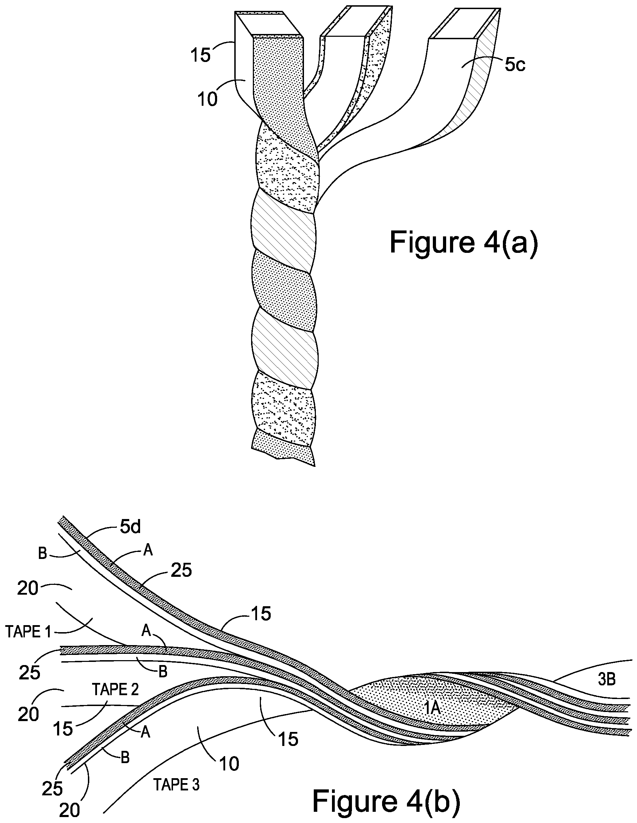

The elongate elements 10, 15 are twisted together. In one embodiment (see Figures 3(a) or (b)), the plurality of elongate elements may comprise two elongate elements. In another embodiment (see Figures 4(a) or (b)), the plurality of elongate elements 10 comprises three elongate elements 10. It will, however, be appreciated that in other embodiments more than three elongate elements 10, 15 may be provided.

There are typically provided 20 to 100, e.g. advantageously 40 to 60 twists per metre length of the composite elongate element. The plurality of elongate elements 10 can be twisted together in a left-handed or S-twist or in a right-handed or Z-twist (according to ISO 2).

In one implementation the at least one of the elongate element(s) 15 comprises one or more of the plurality of elongate elements 10. In another implementation the at least one of the elongate element 15 comprises each of the plurality of elongate elements 10. In said one implementation, other of the plurality of elongate elements comprise a polymeric material(s). At least a surface of the other of the plurality of elongate elements comprises a material or materials similar or dissimilar to, and/or thermally compatible with the at least one polymeric surface of the at least one elongate element.

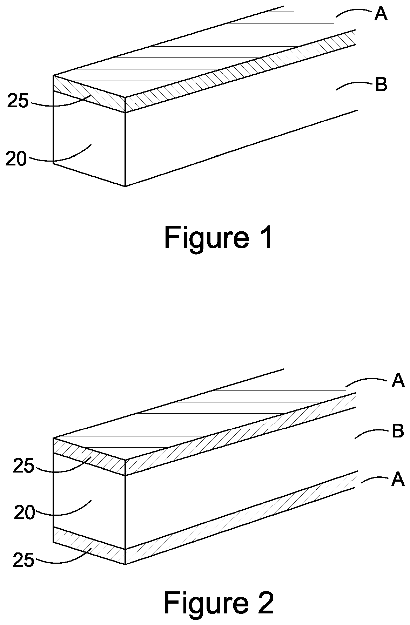

Referring now to Figure 1, in one implementation, the at least one elongate element 15 is substantially planar or flat, e.g. comprises a tape, prior to twisting. In one implementation each of the plurality of elongate elements are substantially planar, e.g. comprise tapes, prior to twisting. Beneficially surfaces, e.g. said at least one polymeric surface layer, of adjacent elongate elements contact or touch one another. The/each at least one elongate element can be coextruded tape, and can be made by a coextrusion process. The/each at least one elongate element 15 can comprise a tape of the form A-B, where B comprises the polymeric base 20 and A comprises the at least one polymeric (planar) surface layer 25.

Alternatively, referring to Figure 2, the/each at least one elongate element can comprise a tape of the form A-B-A, where B comprises the polymeric base 20 and A comprises opposing polymeric (planar) surface layers 25.

Advantageously the/each at least one elongate element 15 comprises a self-reinforcing polymeric material such as self-reinforcing polypropylene (srPP). The/each at least one elongate element 15 comprises a molecularly-oriented thermoplastic polymeric base 20 having at least one thermoplastic surface polymeric layer 25 compatibly bonded to said polymeric base 20 by molecular interspersion between contiguous surfaces of the adjoining base and surface layer(s) 25. Said surface polymeric layer(s) 25 have a softening temperature lower than that of the polymeric base 20.

The/each at least one elongate element can be selected from polypropylene, polyesters, polyethyleneterephthalate, polyamides, Nylon (e.g. 6 or 6.6), or a polyethylene, e.g. having a density in the range 0.940 to 0.970, or linear low density polyethylene.

The polymer base 20 comprises a molecularly-oriented polyolefin polymer, such as a polypropylene polymer. The polymeric surface layer(s) 25 are compatibly bonded to the polymer base by molecular interspersion between the contiguous surfaces of the adjoining base and surface layers 20, 25.

The polymeric surface layer(s) 25 comprises a thermoplastic polymer or copolymer. The polymeric surface layer(s) 25 can comprise ethylene-propylene co-polymer, polybutylene, polybutene-1, or a co-polymer comprising two or more of butylene, ethylene and propylene, co-polyesters and co-polyamides.

The polymer base 20 can be polypropylene and/or the surface layer(s) 25 can comprise an ethylene-propylene co-polymer, a polybutylene such as polybutene-1, or a co-polymer comprising two or more of butylene, ethylene and propylene. Alternatively, the polymer base 20 can be polyester and/or the polymeric surface layer(s) 25 can comprise a co-polyester, or the polymer base 20 can be a polyamide and the surface layer(s) 25 can comprise a co-polyamide.

Elongate elements 10 other than the at least one elongate element 15 comprise (or solely comprise) a polymeric material, e.g. a thermoplastic, e.g. polypropylene, polyester, or polyethylene.

The polymeric material or at least a surface layer polymer material of the other elongate elements 10 is typically thermally compatible, and/or autogenously bondable with the polymeric material of the at least one surface layer 25 of the at least one elongate element 15. For example, the polymeric material and/or surface layer polymer material of the other elongate elements may have a softening point of 10°C or more higher than the softening point of the polymer material of the at least one surface layer of the/each at least one elongate element.

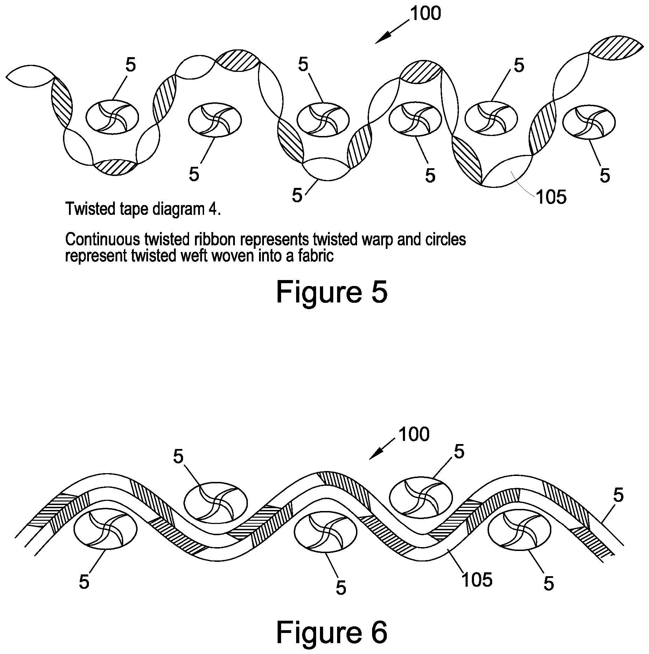

Referring now to Figure 5, there is shown a fabric 100 according to an embodiment of the present invention comprising at least one composite elongate element 5 of Figures 3(a) to 4(b). The fabric 100 comprises a plurality of composite elongate elements 5.

The fabric 100 has been found to provide advantages over the prior art, e.g. it has been found that since a single layer of the fabric 100 is heavier than a single layer of single yarn weave of the prior art, whereas in the prior art single layers have required to be laminated together to provide a suitable material for forming of a product, a single layer of fabric 100 of the present invention suffices. This avoids the need for lamination, so simplifying the manufacturing process and/or avoiding the problem of delamination.

The fabric 100 comprises a plurality of further twisted elongate elements 105, which can be polymeric. Indeed, the plurality of further twisted elongate elements 105 are beneficially the same as the plurality of composite elements 5.

The plurality of composite elongate elements 5 and plurality of further composite elongate elements 105 are mutually interspersed. At least a surface of the further elongate elements 105 comprise a material or materials similar or dissimilar to the polymer surface layer(s) 25. Adjacent elongate elements 5, 105 are fusible together at least at intersections. Fusing can comprise heating the fabric above the melting temperature of the polymeric surface layer(s) 25. Fusing can comprise cooling the fabric 100 to allow the surface layers 25 to solidify. Fusing the elements 5, 105 comprise subjecting the fabric to pressure. Fusing can be achieved by single closure press with flat or contoured plates, continuous belt press, induction heated press or via vacuum bagging and autoclaving.

Figure 6 shows the fabric 100 after consolidation via a combination of heat and/or pressure.

As seen from Figure 5, the fabric 100 comprises a woven fabric. The fabric 100 comprises at least one mat of mutually intersecting elongate elements 5, 105 fusible together at least at their intersections.

The thermoplastic fabric 100 comprises a consolidated mat or sheet, wherein the plurality of composite elongate elements 5, 105 have been consolidated together, e.g. by application of heat and/or pressure. The fabric 100 is advantageously formed without the use of, for example, a resin matrix material, a film or an adhesive.

The elongate elements 5 and/or further elongate elements 105 are selected from tapes, threads, fibres, filaments, strands, or the like.

The further elongate elements can comprise a single layer or homogenous layer. Alternatively, the further elongate elements can comprise a plurality of layers, e.g. A-B, or A-B-A, the same or similar to the elongate elements 5. The further elongate elements 105 can comprise a material or materials similar or dissimilar to the polymeric surface layer 25. The elongate elements 5 and the further elongate elements 105 are formed as tapes. The elongate elements 5 comprise one or two surface layers 25 or two opposing surface layers 25. The elongate elements 5 comprise a layered structure, e.g. comprising a base polymer sandwiched by two polymeric surface layers 25.

The elongate elements 5 and/or further elongate elements 105 are woven together to form the fabric 100. The warp can be formed of composite or further elongate elements 5, 105 and the weft can be formed of the other 105, 5. The warp can be formed of composite elongate elements 5 and the weft can be formed of further elongate elements 105. Alternatively, the warp can be formed of further elongate elements 105 and the weft can be formed of composite elongate elements 5. As mentioned above, the further elongate elements can be the same (i.e. can be identical) to the composite elongate elements 5.

Alternatively, the composite and further elongate elements 5, 105 can be woven together to form the fabric 100, and the warp and/or the weft comprise a mixture of composite and further elongate elements 5, 105. The mixture of composite and further elongate elements 5, 105 can be a random arrangement of composite and further elongate elements 5, 105. Alternatively, the mixture of composite and further elongate elements 5, 105 can be a regular alternation of composite and further elongate elements 5, 105.

The further elongate elements 105 can comprise one or more of: polyesters, polyamides, aramids, thermoplastic polymers, molecularly-oriented thermoplastic polymers, ultra high molecular weight polyalkylenes (UHMWPA), such as ultra high molecular weight polyethylene (UHMWPE) or ultra high molecular weight polypropylene (UHMWPP), and/or multifilament nucleated polypropylenes, and/or carbon fibres.

The further elongate elements 105 can be formed of hybrid yarns. The hybrid yarns can be formed of at least two different materials or fibres comprising polyesters, polyamides, aramids, thermoplastic polymers, molecularly-oriented thermoplastic polymers, ultra high molecular weight polyalkylenes (UHMWPA), such as ultra high molecular weight polyethylene (UHMWPE) or ultra high molecular weight polypropylene (UHMWPP), and/or multifilament nucleated polypropylenes, and/or carbon fibres.

The further elongate elements 105 can be formed of hybrid yarns selected from hybrid yarns comprising aramids and UHMWPE or hybrid yarns comprising polypropylene. The further elongate elements 105 can comprise or consist of ultra high molecular weight polyalkylenes selected from UHMWPE or UHMWPP.

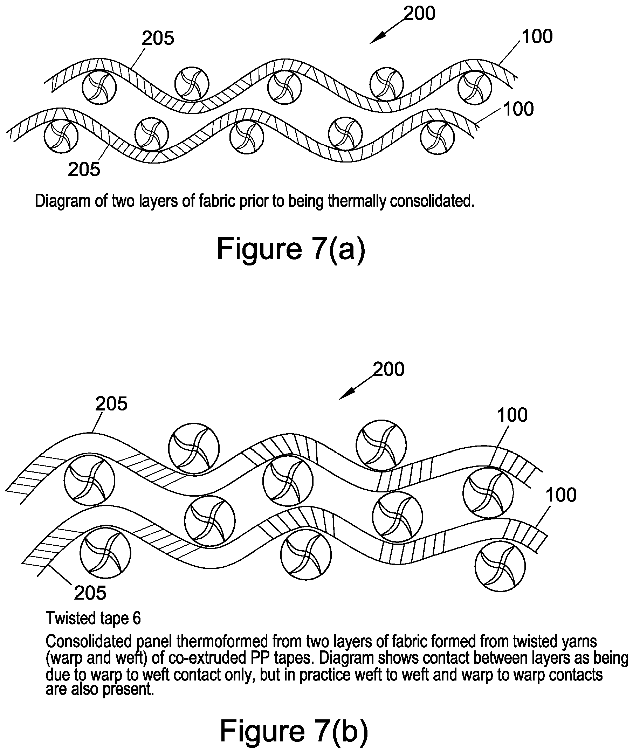

Referring now to Figures 7(a) and (b), there is shown two layers of fabric 100 prior to lamination and after thermal lamination, respectively. Lamination of the two layers of fabric 100 forms a laminated material 200.

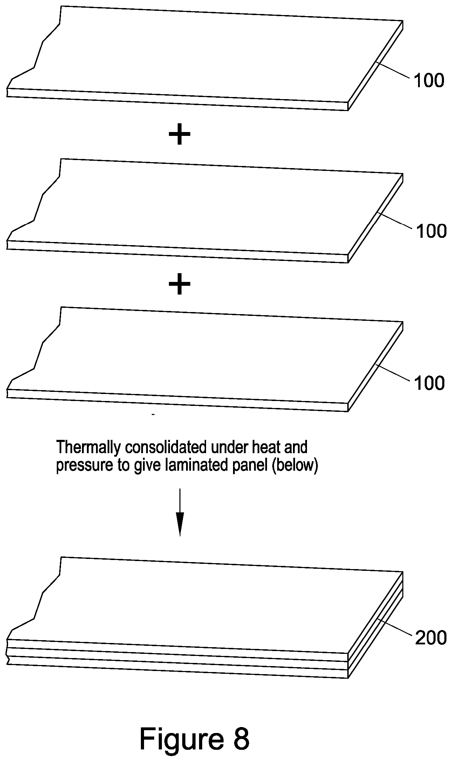

The laminated material 200 comprises a plurality of layers 205, wherein at least one of said layers 205 comprise the fabric 100. In one implementation the laminated material 200 comprises two layers 205, e.g. only two layers, or alternatively three layers, e.g. only three layers (see Figure 8). Advantageously, each layer 205 comprises the fabric 100.

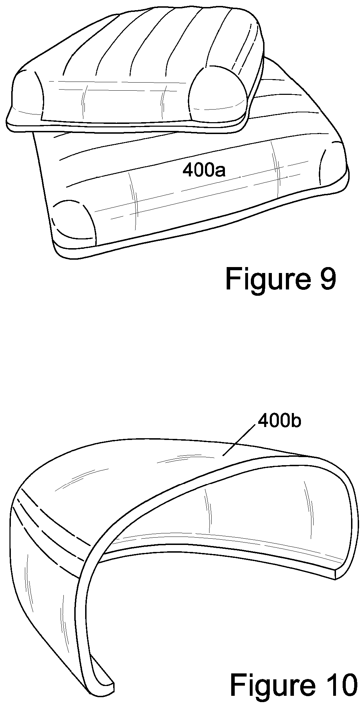

Referring now to Figures 9 to 12, there are shown articles, i.e. three-dimensional articles formed from fabric 100, or alternatively formed from the laminated material 200.

The articles 400a to 400d are typically formed by a moulding technique, e.g. press-moulding. The articles 400a to 400d are capable of withstanding relatively high impact, i.e. the articles 400a to 400d have relatively high impact resistance properties.

Referring to Figure 9, the article 400a comprises a luggage shell, e.g. a shell for a suitcase. Alternatively, the article can comprise or be selected from: an armour product, e.g. body armour, automotive (vehicle) component, or sportswear product. The article can be adapted for antiballistic purposes and/or comprises bulletproof vests, body armour, panels suitable for the protection of military and commercial vehicles, bin liners, blast basket or blast blankets to contain fragmentation debris from the detonation of explosive devices. The article may find use as carpet backing which may be used in automotive or aerospace application or which comprises panels suitable for use on automotive vehicles.

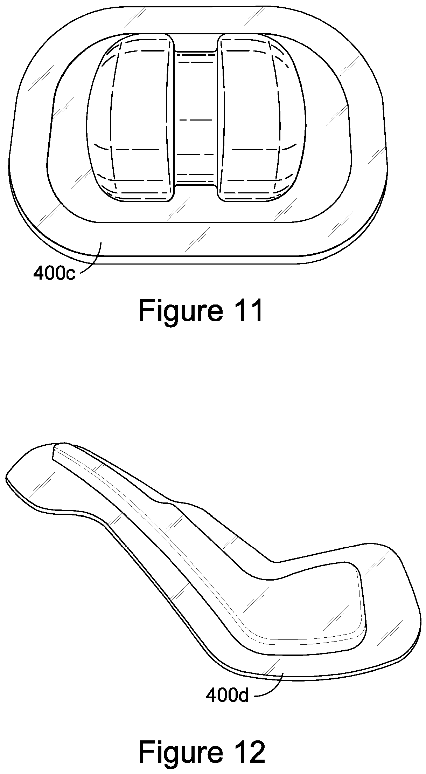

Referring to Figures 10 and 11, the article 400b comprises a toe-cap(s) for protective footwear. Alternatively, the article can comprise connecting straps of handles of intermediate bulk containers or the containers themselves, tarpaulins, packaging, luggage, protective cases, or pipes. Figure 12 shows an article 400d comprising an automotive component (e.g. door trim) prior to finishing/trimming.

The present invention provides a method of forming a composite elongate element 5, the method comprising:
providing a plurality of elongate elements 10;
twisting said plurality of elongate elements 10 together; wherein
at least one of the elongate elements 15 comprises a polymeric base 20 and at least one polymeric surface layer 25, the at least one polymeric surface layer 25 having a softening temperature lower than that of the polymeric base 20.

The present invention provides a method of forming a woven fabric, the method comprising: providing a plurality of composite elongate elements 5; and weaving said plurality of composite elongate elements 5 into said woven fabric 100.

Said step of providing also comprises providing a plurality of further elongate elements 105. The plurality of composite elongate elements 5 can comprise warp/weft yarns. Alternatively or additionally, the plurality of composite elongate elements can comprise weft/warp yarns. The method further comprises the (subsequent) step of consolidating the fabric 100 by application of heat and/or pressure.

The present invention provides a method of forming an article 400, such as a three-dimensional article, comprising the steps of:
providing at least one layer of a fabric 100 or a laminated material 200; and
forming the fabric 100 or laminated material 200 into the article 400.

It will be appreciated that the embodiments of the present invention hereinbefore described are given by way of example only, and are not meant to be limiting to the scope of the invention in any way. It will, for example, be appreciated that the typically heavier fabrics produced by compound weaving of twisted tapes as warp and/or weft avoid the need for multi-layering of fabric. The resultant thermoformed articles are, therefore, less likely to be subject to failure by delamination. The material can be failure averted and utility of the thermoformed parts enhanced.

## Claims

1. A woven fabric (100), comprising at least one composite elongate element (5a-5d) adapted for use as a tape, the composite elongate element comprising a plurality of elongate elements (10) twisted together, wherein at least one of the elongate elements (15) comprises a polymeric base (20) and at least one polymeric surface layer (25), the at least one polymeric surface layer having a softening temperature lower than that of the polymeric base, and wherein the at least one elongate element is substantially planar prior to twisting.

2. A fabric as claimed in claim 1, wherein:
the plurality of elongate elements comprises two elongate elements or three elongate elements, and/or wherein
there are provided 20 to 100, optionally 40 to 60, twists per metre length of the composite elongate element.

3. A fabric as claimed in either of claims 1 or 2, wherein the at least one of the elongate elements (15)
comprises one or more of the plurality of elongate elements (10) and at least one other of the plurality of elongate elements comprises a polymeric material, at least a surface of the at least one other of the plurality of elongate elements comprising a material or materials similar to, dissimilar to and/or thermally compatible to the at least one polymeric surface (25) of the at least one elongate element (15).

4. A fabric as claimed in any preceding claim, wherein each of the plurality of the elongate elements (10) is substantially planar prior to twisting.

5. A fabric as claimed in any preceding claim, wherein
the/each at least one elongate element comprises a tape of the form A-B, where B comprises the polymeric base (20) and A comprises the at least one polymeric surface layer (25), or
the/each at least one elongate element comprises a tape of the form A-B-A, where B comprises the polymeric base (20) and A comprises opposing polymeric surface layers (25).

6. A fabric as claimed in any preceding claim, wherein:
the/each at least one elongate element comprises a coextruded tape; and/or
the polymeric base (20) comprises a molecularly-oriented thermoplastic polymeric base, and the at least one polymeric surface layer (25) comprises at least one thermoplastic surface polymeric layer compatibly bonded to said polymeric base by molecular interspersion between contiguous surfaces of the adjoining base and surface layer(s).

7. A fabric as claimed in any preceding claim, wherein the/each at least one elongate element (15) is selected from a polyolefin polymer, polypropylene, polyesters. polyethyleneterephthalate, Nylon, polyethylene, linear low density polyethylene or polyamide(s).

8. A fabric as claimed in any preceding claim, wherein the polymeric surface layer (25)
comprises ethylene-propylene co-polymer, polybutylene, polybutene-1 or a copolymer comprising two or more of butylene, ethylene and propylene, co-polyesters and co-polyamides.

9. A fabric as claimed in any preceding claim, wherein other elongate elements of the plurality of elongate elements other than the at least one elongate element comprise or solely comprise a polymeric material, such as polypropylene, polyester, polyethylene.

10. A fabric as claimed in claim 9, wherein:
a surface layer polymer material and/or the polymeric material of the other elongate elements (105) is thermally compatible and/or autogenously bonded with the polymeric material of the at least one surface layer (25) of the/each at least one elongate
element, and/or
the polymeric material and/or a surface layer polymer material of the other elongate elements (105) has a softening point of 10°C or more higher than the softening point of the polymer material of the at least one surface layer (25) of the/each at least one elongate element.

11. A fabric (100) as claimed in claim 1 wherein the fabric comprises a single layer of fabric, such as a consolidated single layer.

12. A laminated material (200) comprising a plurality of layers, wherein at least one of said layers comprises a fabric (100) according to claim 1.

13. An article (400a-400d), such as a three-dimensional article, formed from a fabric (100) of claim 1, such as a single layer of said fabric, or formed from a laminated material (200) of claim 12.

14. A method of forming a woven fabric (100), the method comprising:
providing a plurality of composite elongate elements (5a-5d), wherein each composite elongate element comprises a plurality of elongate elements (10) twisted together, wherein at least one of the elongate elements (15) comprises a polymeric base (20) and at least one polymeric surface layer (25), the at least one polymeric surface layer having a softening temperature lower than that of the polymeric base, and wherein the at least one elongate element is substantially planar prior to twisting;
weaving said plurality of composite elongate elements into said woven fabric; and
consolidating the fabric by application of heat and/or pressure.

15. A method of forming an article (400a-400d), such as a three-dimensional article, comprising the steps of:
providing a fabric (100) according to claim 11 or a laminated material according to claim 12; and
forming the fabric or the laminated material into the article.

## Patentansprüche

1. Gewobener Textilstoff (100), umfassend mindestens ein langgezogenes Verbundstoffelement (5a-5d), das zur Verwendung als Band geeignet ist, wobei das langgezogene Verbundstoffelement eine Vielzahl von langgezogenen, miteinander verzwirnten Elementen (10) umfasst, wobei mindestens eines der langgezogenen Elemente (15) eine polymere Basis (20) und mindestens eine polymere Oberflächenschicht (25) umfasst, wobei die mindestens eine polymere Oberflächenschicht eine Erweichungstemperatur aufweist, die niedriger ist als diejenige der polymeren Trägerschicht und wobei das mindestens eine langgezogene Element vor dem Verzwirnen im Wesentlichen planar ist.

2. Textilstoff nach Anspruch 1, wobei:
die Vielzahl von langgezogenen Elementen zwei langgezogene Elemente oder drei langgezogene Elemente umfasst und/oder wobei
20 bis 100, wahlweise 40 bis 60, Verdrehungen pro Meter Länge des langegezogenen Verbundstoffelements bereitgestellt werden.

3. Textilstoff nach einem der Ansprüche 1 oder 2, wobei das mindestens eine der langgezogenen Elemente (15) eines oder mehrere der Vielzahl langgezogener Elemente (10) umfasst und mindestens ein anderes der Vielzahl langgezogener Elemente ein polymeres Material umfasst, wobei mindestens eine Oberfläche des mindestens einen anderen der Vielzahl langgezogener Elemente ein Material oder Materialien umfasst, das/die ähnlich der, unähnlich der und/oder thermisch verträglich mit der mindestens einen polymeren Oberfläche (25) des mindestens einen langgezogenen Elements (15) ist/sind.

4. Textilstoff nach einem vorhergehenden Anspruch, wobei jedes der Vielzahl der langgezogenen Elemente (10) vor dem Verzwirnen im Wesentlichen planar ist.

5. Textilstoff nach einem vorhergehenden Anspruch, wobei
das/jedes mindestens eine langgezogene Element ein Band in der Form A-B umfasst, worin B die polymere Basis (20) umfasst und A die mindestens eine polymere Oberflächenschicht (25) umfasst oder
das/jedes mindestens eine langgezogene Element ein Band der Form A-B-A umfasst, worin B die polymere Basis (20) umfasst und A entgegengesetzte polymere Oberflächenschichten (25) umfasst.

6. Textilstoff nach einem vorhergehenden Anspruch, wobei
das/jedes mindestens eine langgezogene Element ein coextrudiertes Band umfasst; und/oder
die polymere Basis (20) eine molekular orientierte thermoplastische polymere Basis umfasst und die mindestens eine polymere Oberflächenschicht (25) mindestens eine thermoplastische polymere Oberflächenschicht umfasst, die verträglich mit der polymeren Basis durch molekulares Zwischenfügen zwischen anliegenden Oberflächen der angrenzenden Basis und der Oberflächenschicht(en) verbunden ist.

7. Textilstoff nach einem vorhergehenden Anspruch, wobei das/jedes mindestens eine langgezogene Element (15) unter einem Polyolefinpolymer, Polypropylen, Polyestern, Polyethylenterephthalat, Nylon, Polyethylen, linearem Polyethylen niedriger Dichte oder Polyamid(en) ausgewählt wird.

8. Textilstoff nach einem vorhergehenden Anspruch, wobei die polymere Oberflächenschicht (25) Ethylen-Propylen-Copolymer, Polybutylen, Polybuten-1 oder ein Copolymer umfasst, das zwei oder mehr von Butylen, Ethylen und Propylen, Copolyestern und Copolyamiden umfasst.

9. Textilstoff nach einem vorhergehenden Anspruch, wobei andere langgezogenen Elemente der Vielzahl langgezogener Elemente, außer dem mindestens einen langgezogenen Element, ein polymeres Material wie beispielsweise Polypropylen, Polyester, Polyethylen umfassen oder ausschließlich umfassen.

10. Textilstoff nach Anspruch 9, wobei:
ein Oberflächenschichtpolymermaterial und/oder das polymere Material der anderen langgezogenen Elemente (105) thermisch verträglich und/oder autogen mit dem polymeren Material der mindestens einen Oberflächenschicht (25) des/jedes mindestens einen langgezogenen Elements gebunden ist und/oder
das polymere Material und/oder ein Oberflächenschichtpolymermaterial der anderen langgezogenen Elemente (105) einen Erweichungspunkt aufweist, der um 10 °C oder mehr höher ist als der Erweichungspunkt des Polymermaterials der mindestens einen Oberflächenschicht (25) des/jedes mindestens einen langgezogenen Elements.

11. Textilstoff (100) nach Anspruch 1, wobei der Textilstoff eine einzige Schicht Textilstoff, wie beispielsweise eine konsolidierte einzelne Schicht, umfasst.

12. Laminiertes Material (200) umfassend eine Vielzahl von Schichten, wobei mindestens eine der Schichten einen Textilstoff (100) nach Anspruch 1 umfasst.

13. Artikel (400a-400d), wie beispielsweise ein dreidimensionaler Artikel, der aus einem Textilstoff (100) nach Anspruch 1, wie beispielsweise einer einzigen Schicht des Textilstoffs oder aus einem laminierten Material (200) nach Anspruch 12 gebildet ist.

14. Verfahren zum Bilden eines gewobenen Textilstoffs (100), wobei das Verfahren Folgendes umfasst:
Bereitstellen einer Vielzahl langegezogener Verbundstoffelemente (5a-5d), wobei jedes langgezogene Verbundstoffelement eine Vielzahl von langgezogenen, miteinander verzwirnten Elementen (10) umfasst, wobei mindestens eines der langgezogenen Elemente (15) eine polymere Basis (20) und mindestens eine polymere Oberflächenschicht (25) umfasst, wobei die mindestens eine polymere Oberflächenschicht eine Erweichungstemperatur aufweist, die niedriger ist als diejenige der polymeren Basis und wobei das mindestens eine langgezogene Element vor dem Verzwirnen im Wesentlichen planar ist;
Weben der Vielzahl von langgezogenen Verbundstoffelementen zu dem gewobenen Textilstoff; und
Konsolidieren des Textilstoffs durch Aufbringen von Hitze und/oder Druck.

15. Verfahren zum Bilden eines Artikels (400a-400d), wie beispielsweise eines dreidimensionalen Artikels, umfassend die Schritte des:
Bereitstellens eines Textilstoffs (100) nach Anspruch 11 oder eines laminierten Materials nach Anspruch 12; und
Bildens des Textilstoffs oder des laminierten Materials in den Artikel.

## Revendications

1. Textile tissé (100), comprenant au moins un élément allongé composite (5a-5d) adapté pour l'utilisation comme une bande, l'élément allongé composite comprenant une pluralité d'éléments allongés (10) torsadés ensemble, dans lequel au moins l'un des éléments allongés (15) comprend une base polymère (20) et au moins une couche de surface polymère (25), l'au moins une couche de surface polymère ayant une température de ramollissement inférieure à celle de la base polymère, et dans lequel l'au moins un élément allongé est sensiblement plan avant le torsadage.

2. Textile selon la revendication 1, dans lequel :
la pluralité d'éléments allongés comprend deux éléments allongés ou trois éléments allongés, et/ou dans lequel
sont prévues 20 à 100, facultativement 40 à 60, torsions par mètre de longueur de l'élément allongé composite.

3. Textile selon l'une quelconque de la revendication 1 ou de la revendication 2, dans lequel l'au moins un des éléments allongés (15) comprend l'un ou plusieurs de la pluralité d'éléments allongés (10) et au moins un autre de la pluralité d'éléments allongés comprend un matériau polymère, au moins une surface de l'au moins un autre de la pluralité d'éléments allongés comprenant un matériau ou des matériaux semblable(s) à, dissemblable(s) de, et/ou thermiquement compatible(s) avec, l'au moins une surface polymère (25) de l'au moins un élément allongé (15).

4. Textile selon l'une quelconque des revendications précédentes, dans lequel chacun de la pluralité des éléments allongés (10) est sensiblement plan avant le torsadage.

5. Textile selon l'une quelconque des revendications précédentes, dans lequel
le/chaque au moins un élément allongé comprend une bande de forme A-B, où B comprend la base polymère (20) et A comprend l'au moins une couche de surface polymère (25), ou
le/chaque au moins un élément allongé comprend une bande de forme A-B-A, où B comprend la base polymère (20) et A comprend des couches de surface polymères (25) opposées.

6. Textile selon l'une quelconque des revendications précédentes, dans lequel :
le/chaque au moins un élément allongé comprend une bande coextrudée ; et/ou
la base polymère (20) comprend une base polymère thermoplastique orientée moléculairement, et l'au moins une couche de surface polymère (25) comprend au moins une couche de surface polymère thermoplastique liée de manière compatible à ladite base polymère par entremêlement moléculaire entre des surfaces contiguës de la base adjacente et de la (des) couche(s) de surface.

7. Textile selon l'une quelconque des revendications précédentes, dans lequel le/chaque au moins un élément allongé (15) est sélectionné parmi un polymère de polyoléfine, du polypropylène, des polyesters, du poly(téréphtalate d'éthylène), du nylon, du polyéthylène, du polyéthylène linéaire basse densité ou du (des) polyamide(s).

8. Textile selon l'une quelconque des revendications précédentes, dans lequel la couche de surface polymère (25) comprend un co-polymère d'éthylène-propylène, du polybutylène, du polybutène-1 ou un co-polymère comprenant deux constituants ou plus parmi le butylène, l'éthylène et le propylène, les co-polyesters et les co-polyamides.

9. Textile selon l'une quelconque des revendications précédentes, dans lequel d'autres éléments allongés de la pluralité d'éléments allongés autres que l'au moins un élément allongé comprennent, ou comprennent uniquement, un matériau polymère, tel que du polypropylène, du polyester, du polyéthylène.

10. Textile selon la revendication 9, dans lequel :
un matériau polymère de couche de surface et/ou le matériau polymère des autres éléments allongés (105) est thermiquement compatible et/ou lié de manière autogène au matériau polymère de l'au moins une couche de surface (25) de chaque/de l'au moins un élément allongé, et/ou
le matériau polymère et/ou un matériau polymère de couche de surface des autres éléments allongés (105) présente un point de ramollissement supérieur de 10 °C ou plus au point de ramollissement du matériau polymère de l'au moins une couche de surface (25) de chaque/de l'au moins un élément allongé.

11. Textile (100) selon la revendication 1, dans lequel le textile comprend une couche unique de textile, telle qu'une couche unique consolidée.

12. Matériau stratifié (200) comprenant une pluralité de couches, dans lequel au moins l'une desdites couches comprend un textile (100) selon la revendication 1.

13. Article (400a-400d), tel qu'un article tridimensionnel, formé à partir d'un textile (100) selon la revendication 1, tel qu'une couche unique dudit textile, ou formé à partir d'un matériau stratifié (200) selon la revendication 12.

14. Procédé de mise en forme d'un textile tissé (100), le procédé comprenant :
la fourniture d'une pluralité d'éléments allongés composites (5a-5d), dans lequel chaque élément allongé composite comprend une pluralité d'éléments allongés (10) torsadés ensemble, dans lequel au moins l'un des éléments allongés (15) comprend une base polymère (20) et au moins une couche de surface polymère (25), l'au moins une couche de surface polymère ayant une température de ramollissement inférieure à celle de la base polymère, et dans lequel le au moins un élément allongé est sensiblement plan avant le torsadage ;
tissage de ladite pluralité d'éléments allongés composites en ledit textile tissé ; et
consolidation du textile par application de chaleur et/ou de pression.

15. Procédé de mise en forme d'un article (400a-400d), tel qu'un article tridimensionnel, comprenant les étapes consistant à :
fournir un textile (100) selon la revendication 11 ou un matériau stratifié selon la revendication 12 ; et
mettre en forme le textile ou le matériau stratifié en l'article.
